(19) Europäisches Patentamt
European Patent Office
Office européen des brevets

(11) **EP 2 268 590 B1**

(12) **FASCICULE DE BREVET EUROPEEN**

(45) Date de publication et mention
de la délivrance du brevet:
**13.06.2018 Bulletin 2018/24**

(21) Numéro de dépôt: **09742304.0**

(22) Date de dépôt: **10.04.2009**

(51) Int Cl.:
*C03C 25/34* (2006.01)          *C03C 25/26* (2018.01)
*C08J 5/04* (2006.01)            *C08J 5/24* (2006.01)
*C08K 5/17* (2006.01)            *C09J 161/06* (2006.01)
*C09J 161/14* (2006.01)          *C08K 5/151* (2006.01)
*C09J 161/34* (2006.01)

(86) Numéro de dépôt international:
**PCT/FR2009/050654**

(87) Numéro de publication internationale:
**WO 2009/136106 (12.11.2009 Gazette 2009/46)**

(54) **COMPOSITION D'ENCOLLAGE POUR FIBRES MINÉRALES ET PRODUITS RÉSULTANTS**

SCHLICHTUNGSZUSAMMENSETZUNG FÜR MINERALFASERN UND AUF DIESE WEISE
GEWONNENE PRODUKTE

SIZING COMPOSITION FOR MINERAL FIBERS AND RESULTING PRODUCTS

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**
Etats d'extension désignés:
**AL BA RS**

(30) Priorité: **11.04.2008 FR 0802017**

(43) Date de publication de la demande:
**05.01.2011 Bulletin 2011/01**

(73) Titulaire: **Saint-Gobain Isover
92400 Courbevoie (FR)**

(72) Inventeurs:
• **PONS Y MOLL, Olivier
F-60600 Agnetz (FR)**
• **JAFFRENNOU, Boris
F-75019 Paris (FR)**
• **DOUCE, Jérôme
F-75010 Paris (FR)**

(74) Mandataire: **Saint-Gobain Recherche
Département Propriété Industrielle
39 Quai Lucien Lefranc
93300 Aubervilliers (FR)**

(56) Documents cités:
WO-A-00/78836          WO-A-98/53001
WO-A-2006/132785       WO-A-2007/060237
WO-A-2008/043960       WO-A-2008/043961
GB-A- 1 284 568        US-A- 3 285 801

Remarques:
Le dossier contient des informations techniques
présentées postérieurement au dépôt de la demande
et ne figurant pas dans le présent fascicule.

EP 2 268 590 B1

**Description**

L'invention se rapporte à une composition d'encollage à bas taux de formaldéhyde libre pour fibres minérales, notamment de verre ou de roche. La composition d'encollage comprend une résine obtenue par condensation de phénol, de formaldéhyde et d'amine en présence d'un catalyseur basique, et un extendeur.

L'invention concerne aussi les produits isolants à base de fibres minérales traitées par ladite composition d'encollage.

Les produits d'isolation à base de fibres minérales peuvent être formés à partir de fibres obtenues par différents procédés, par exemple selon la technique connue du fibrage centrifuge interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

La centrifugation externe consiste, elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, à la sortie du dispositif centrifuge, une composition d'encollage contenant une résine thermodurcissable. La nappe de fibres revêtues de l'encollage est soumise à un traitement thermique (à une température généralement supérieure à 100°C) afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage est le plus souvent pulvérisée sur les fibres. De manière générale, la composition d'encollage renferme la résine, qui se présente habituellement sous la forme d'une solution aqueuse, des additifs tels que de l'urée, des silanes, des huiles minérales, de l'ammoniaque et un catalyseur de polycondensation, et de l'eau.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement. L'aptitude à la pulvérisation est directement liée à la capacité que possède la résine à pouvoir être diluée dans une grande quantité d'eau et à rester stable dans le temps.

On caractérise l'aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C.

La préparation de la composition d'encollage est généralement effectuée au moment de l'emploi en mélangeant la résine et les additifs mentionnés précédemment. Il est important que la résine reste stable pendant un laps de temps donné avant d'être utilisée dans la composition d'encollage, notamment pendant au moins 8 jours à une température de l'ordre de 12 à 18°C et que sa diluabilité au terme de cette période soit supérieure ou égale à 1000 %, à 20°C, de préférence supérieure ou égale à 2000 % (diluabilité infinie).

Par ailleurs, les compositions d'encollage sont soumises à des dispositions réglementaires strictes qui font que la résine doit contenir - et générer lors de l'étape d'encollage ou ultérieurement lors de la cuisson du produit d'isolation - le moins possible de composés considérés comme pouvant nuire à la santé humaine ou à l'environnement.

Les résines thermodurcissables les plus couramment utilisées dans les compositions d'encollage sont des résines phénoliques appartenant à la famille des résols. Outre leur bonne aptitude à réticuler dans les conditions thermiques précitées, ces résines sont très solubles dans l'eau, possèdent une bonne affinité pour les fibres minérales, notamment en verre, et sont relativement peu coûteuses.

Ces résines sont obtenues par condensation de phénol et de formaldéhyde, en présence d'un catalyseur basique, dans un rapport molaire formaldéhyde/phénol généralement supérieur à 1 de manière à favoriser la réaction entre le phénol et le formaldéhyde et à diminuer le taux de phénol résiduel dans la résine.

Pour réduire la quantité de formaldéhyde résiduel, il est connu d'ajouter dans la résine une quantité suffisante d'urée qui réagit avec le formaldéhyde libre en formant des condensats urée-formaldéhyde (voir EP 0 148 050 A1). La résine obtenue renferme des condensats de phénol-formaldéhyde et d'urée-formaldéhyde, présente un taux de formaldéhyde libre et de phénol libre, exprimé en poids total de liquide, inférieur ou égal à 3 % et 0,5 %, respectivement, et a une diluabilité à l'eau au moins égale à 1000 %.

Si la quantité de phénol résiduel est acceptable, en revanche la quantité de formaldéhyde résiduel est trop élevée pour satisfaire les contraintes réglementaires actuelles.

En outre, il a été constaté que la résine n'est pas stable dans les conditions du traitement thermique auxquelles les fibres encollées sont soumises pour que la résine réticule et lie efficacement les fibres dans le produit isolant final. Aux températures habituelles mises en oeuvre dans l'étuve, en général supérieures à 100°C, les condensats urée-formaldéhyde sont dégradés et libèrent du formaldéhyde qui augmente les émissions de gaz indésirables dans l'atmosphère. Du formaldéhyde peut aussi être libéré à partir du produit final lors de son utilisation en tant qu'isolant thermique et/ou acoustique sous l'effet des variations thermiques, mais aussi hygrométriques, liées aux cycles climatiques.

Dans EP 0 480 778 A1, il a été proposé de substituer une partie de l'urée par une amine qui réagit avec le phénol et le formaldéhyde libres selon la réaction de Mannich pour former un produit de condensation ayant une stabilité thermique améliorée. Le taux de phénol et de formaldéhyde libres de cette résine est inférieur ou égal à 0,20 % et inférieur ou égal à 3 %, respectivement.

WO 2007/060237 divulgue des compositions de liant contenant une dispersion aqueuse d'une résine phénol-formaldéhyde et au moins une amine présente sous forme libre.

WO 2006/132785 décrit compositions de liants pour panneaux de particules contenant des résines phénol-formaldéhyde de type résols, un polymère vinylique à groupes ester et une protéine.

La présente invention a pour but de proposer une composition d'encollage apte à être pulvérisée sur des fibres minérales qui comprend une résine phénolique liquide ayant un faible taux de formaldéhyde libre et un extendeur.

Par « extendeur », on entend ici une charge organique soluble ou dispersable dans la composition d'encollage aqueuse, c'est-à-dire pouvant être distribuée ou présente sous forme d'une dispersion ou d'une émulsion.

L'invention a plus généralement pour objet une composition résinique qui comprend une résine phénolique liquide ayant un faible taux de formaldéhyde libre et un extendeur. Cette composition résinique est destinée notamment à entrer dans la constitution de la composition d'encollage précitée.

Un autre objet de l'invention concerne les produits d'isolation thermique et/ou acoustique obtenus à partir des fibres minérales encollées avec la composition d'encollage précitée.

La résine liquide qui entre dans la constitution de la composition d'encollage conforme à l'invention présente un taux de formaldéhyde libre inférieur ou égal à 0,1 % en poids total de liquide, de préférence inférieur ou égal à 0,05 %.

Le taux de phénol libre de la résine est inférieur ou égal à 0,5 % en poids total de liquide, de préférence inférieur ou égal à 0,4 %.

La résine est une résine liquide qui contient essentiellement des condensats de phénol-formaldéhyde (P-F) et de phénol-formaldéhyde-monoéthanolamine (P-F-A). On entend ici que la partie « phénol » notée P des condensats peut être constituée par (i) du phénol, ou (ii) du phénol substitué par au moins un groupe fonctionnel (tels que halogéno-, nitro-, alkyl-), ou (iii) un groupement phénol, éventuellement substitué, porté par une molécule à longue chaîne, ou (iv) par un mélange de composés (i), (ii), (iii) précités.

La résine présente une diluabilité, mesurée à 20°C, au moins égale à 1000 %, de préférence supérieure ou égale à 1200 % et avantageusement supérieure ou égale à 1400 %.

La résine est stable thermiquement car elle est exempte de condensats urée-formaldéhyde (U-F) connus pour leur aptitude à se dégrader sous l'effet de la température. Les condensats P-F-A sont quant à eux stables dans les conditions précitées, notamment ils génèrent peu de formaldéhyde, en particulier lors du vieillissement du produit isolant final.

La résine telle que définie ci-dessus est obtenue selon un procédé qui consiste à faire réagir un phénol tel que défini précédemment, de préférence du phénol, et du formaldéhyde en présence d'un catalyseur basique, dans un rapport molaire formaldéhyde/phénol supérieur à 1, à refroidir le mélange réactionnel et à introduire dans ledit mélange réactionnel, au cours du refroidissement, l'amine qui réagit avec le formaldéhyde et le phénol libres selon la réaction de Mannich.

Dès l'introduction de l'amine, on interrompt le refroidissement et on maintient le mélange réactionnel à la température d'introduction pendant une durée qui varie de 10 à 120 minutes, et, après le refroidissement, on ajoute un acide en quantité suffisante pour que le pH de la résine soit inférieur à 7.

De préférence, on fait réagir le phénol et le formaldéhyde dans un rapport molaire formaldéhyde/phénol compris entre 2 et 4, ou avantageusement inférieur ou égal à 3, jusqu'à un taux de conversion du phénol supérieur ou égal à 93 %, et on commence à refroidir le mélange réactionnel. Le refroidissement intervient à un stade de la condensation qui correspond à une résine pouvant encore être diluée par de l'eau (diluabilité supérieure à 1000 %).

Par « taux de conversion du phénol », on entend le pourcentage de phénol ayant participé à la réaction de condensation avec le formaldéhyde par rapport au phénol de départ.

L'amine est ajoutée au cours du refroidissement, de manière progressive car la réaction avec le phénol et le formaldéhyde est exothermique, et la température au moment de l'ajout de l'amine est maintenue pendant la durée mentionnée plus haut, tout en veillant à ce que la diluabilité de la résine reste au moins égale à 1000 %.

L'amine est la monoéthanolamine.

L'introduction de l'amine est effectuée dès le début du refroidissement, à une température qui peut varier de 50 à 65°C, de préférence de l'ordre de 60°C.

La phase de maintien de la température permet de faire réagir l'amine avec la quasi-totalité du formaldéhyde présent dans le milieu réactionnel et par conséquent d'abaisser le taux de formaldéhyde libre dans la résine finale jusqu'à une valeur inférieure ou égale à 0,1 %.

Le maintien à la température mentionnée précédemment permet en outre de réduire le taux de phénol libre dans la résine, en particulier lorsque celle-ci est obtenue avec un rapport molaire formaldéhyde/phénol inférieur à 3. Le taux de phénol libre dans la résine est ainsi inférieur ou égal à 0,5 %.

La préparation de la résine a lieu selon un cycle de température qui comprend trois phases : une phase de chauffage, un premier palier de température et une phase de refroidissement.

Dans la première phase, on fait réagir du formaldéhyde et du phénol en présence d'un catalyseur basique en chauffant progressivement à une température comprise entre 60 et 75°C, de préférence à environ 70°C. Le rapport molaire formaldéhyde/phénol est supérieur à 1, de préférence varie de 2 à 4, et avantageusement inférieur ou égal à 3.

Le catalyseur peut être choisi parmi les catalyseurs connus de l'homme du métier, par exemple la triéthylamine, la chaux CaO et les hydroxydes de métaux alcalins ou alcalino-terreux, par exemple les hydroxydes de sodium, de potassium, de calcium ou de baryum. L'hydroxyde de sodium est préféré.

La quantité de catalyseur varie de 2 à 15 % en poids par rapport au poids de phénol de départ, de préférence de 5 à 9 %, et avantageusement de 6 à 8 %.

Dans la deuxième phase, la température du mélange réactionnel qui est atteinte après le chauffage du mélange réactionnel (fin de première phase) est maintenue jusqu'à ce que le taux de conversion du phénol soit au moins égal à 93 %.

La troisième phase est une phase de refroidissement au cours de laquelle on introduit l'amine dans le mélange réactionnel afin de commencer la réaction avec le formaldéhyde et le phénol résiduels et former ainsi les condensats P-F-A.

L'addition de l'amine a lieu progressivement à cause du caractère exothermique de la réaction comme indiqué précédemment, et peut par exemple être effectuée à raison de 1 à 5 % en poids par minute de la quantité totale d'amine, de préférence 2 à 4 %.

La quantité d'amine est ajoutée à raison de 0,2 à 0,7 mole d'amine par mole de phénol de départ, de préférence 0,25 à 0,5 mole.

La durée de l'ajout de l'amine peut varier de 10 à 120 minutes, de préférence de 20 à 100 minutes, et avantageusement de 25 à 50 minutes.

De préférence, l'ajout de l'amine s'effectue à une température comprise entre 50 et 65°C, et avantageusement de l'ordre de 60°C.

Après l'ajout de l'amine, on effectue un palier de température en maintenant la température de fin d'introduction pendant 10 à 120 minutes, de préférence au moins 15 minutes, de manière à poursuivre la réaction de condensation du formaldéhyde et du phénol avec l'amine jusqu'à un stade plus avancé et réduire encore la quantité de formaldéhyde et de phénol libres, la diluabilité de la résine, mesurée à 20°C, devant être maintenue au moins égale à 1000 %.

Après la formation des condensats P-F-A, on refroidit le mélange réactionnel pour que sa température atteigne 20 à 25°C environ et on le neutralise afin d'arrêter les réactions de condensation.

La neutralisation du mélange réactionnel est effectuée par l'ajout d'un acide jusqu'à l'obtention d'un pH inférieur à 7, de préférence inférieur à 6, avantageusement supérieur à 4 et mieux encore de l'ordre de 5. L'acide est choisi parmi l'acide sulfurique, l'acide sulfamique, l'acide phosphorique et l'acide borique. L'acide sulfurique et l'acide sulfamique sont préférés.

L'extendeur est choisi notamment parmi les hydrates de carbone.

A titre d'exemple d'hydrates de carbone, on peut citer les monosaccharides tels que l'érythrose, le thréose, le ribose, l'arabinose, le xylose, le lyxose, le glucose, l'allose, l'altrose, le mannose, le gulose, l'idose, le galactose, le talose le psicose, le fructose, le sorbose et le tagatose, les oligosaccharides tels que le lactose, le maltose, le sucrose, le cellobiose, le tréhalose, le raffinose, le gentianose, le melibiose et le stachyose, et les polysaccharides tels que les amidons, notamment de maïs, de pomme de terre, de tapioca et de blé, lesquels amidons peuvent être modifiés ou non, les celluloses, les gommes telles que la gomme de guar et le xanthane, les alginates, les pectines.

Les hydrates de carbone hydrosolubles sont préférés.

La composition d'encollage peut comprendre en outre 0 à 40 parts d'urée pour 100 parts en poids sec du mélange constitué par la résine et l'urée.

Ces extendeurs peuvent le cas échéant être à base de sous-produits issus de procédés industriels ou agricoles, notammment agro-alimentaires, ou d'autres déchets. Ces matières présentent l'avantage d'être disponibles par des filières distinctes des constituants chimiques généralement utilisés dans la synthèse des résines phénoliques, ce qui rend la préparation de la composition selon l'invention moins sensible aux aléas de production des matières premières conventionnelles.

Dans la composition d'encollage, la teneur en extendeur varie de 0,1 à 40 parts en poids pour 100 parts en poids sec de résine liquide, de préférence inférieure ou égale à 20 parts, par exemple de 3 à 20 parts et notamment inférieure ou égale à 15 parts.

D'une manière générale, la composition d'encollage comprend encore les additifs suivants, pour 100 parts en poids sec de résine et le cas échéant d'urée :

- 0 à 10 parts d'un catalyseur de polycondensation, par exemple le sulfate d'ammonium, de préférence moins de 7 parts,
- 0 à 2 parts de silane, en particulier un aminosilane,
- 0 à 20 parts d'huile, de préférence 6 à 15 parts,
- 0 à 20 parts d'ammoniaque (solution à 20 % en poids), de préférence moins de 12 parts.

Le rôle des additifs est connu et brièvement rappelé : l'urée permet d'ajuster le temps de gel de la composition d'encollage afin d'éviter d'éventuels problèmes de prégélification ; le sulfate d'ammonium sert de catalyseur de polycondensation (dans l'étuve à chaud) après la pulvérisation de la composition d'encollage sur les fibres ; le silane est un agent de couplage entre les fibres et la résine, et joue également le rôle d'agent anti-vieillissement ; les huiles sont des agents anti-poussières et hydrophobes ; l'ammoniaque joue, à froid, le rôle de retardateur de polycondensation.

Les exemples qui suivent permettent d'illustrer l'invention sans toutefois la limiter.

### EXEMPLE 1

Dans un réacteur de 2 litres surmonté d'un condenseur et équipé d'un système d'agitation, on introduit 378 g de phénol (4 moles) et 809 g de formaldéhyde (10 moles) en solution aqueuse à 37% (rapport molaire formaldéhyde/phénol égal à 2,5) et on chauffe le mélange à 45°C sous agitation.

On ajoute régulièrement en 30 minutes 52,7 g de soude en solution aqueuse à 50 % (soit 7 % en poids par rapport au phénol), puis on élève la température progressivement à 70°C en 30 minutes et on la maintient pendant 80 minutes de manière à atteindre un taux de conversion du phénol égal à 93 %.

Ensuite, on diminue la température à 60 °C en 30 minutes et simultanément on introduit dans le mélange réactionnel, de manière régulière, 75,3 g de monoéthanolamine (1,2 mole). On maintient la température à 60°C pendant 15 minutes, on refroidit le mélange jusqu'à 25°C environ en 30 minutes et on ajoute de l'acide sulfamique en solution à 15 %, en 60 minutes, jusqu'à ce que le pH soit égal à 5,0.

La résine obtenue a l'aspect d'une composition aqueuse limpide : elle présente un taux de formaldéhyde libre égal à 0,05 %, un taux de phénol libre égal à 0,2 % (les taux étant exprimés en poids total de liquide) et une diluabilité supérieure à 2000 %.

On ajuste la teneur pondérale en matières solides de la résine liquide à 50 % avec de l'eau, et on ajoute de l'urée (20 parts en poids pour 80 parts en poids sec de la résine liquide).

On prépare une composition d'encollage en mélangeant 100 parts en poids sec du mélange précité de résine et d'urée, 7 parts en poids de mélasse, 3 parts de sulfate d'ammonium, 1 part de silane (Silquest® A-1100 commercialisé par OSI) et 8 parts d'une huile minérale.

Cette composition d'encollage est utilisée pour fabriquer un produit isolant à base de laine minérale. De manière classique, la composition d'encollage est pulvérisée sur des fibres de verre à la sortie du dispositif de fibrage à raison de 4,5 % en poids sec d'encollage par rapport au poids des fibres. Les fibres encollées sont collectées sur un convoyeur à bande où elles forment un matelas de laine de verre qui est ensuite soumis à un traitement thermique dans une étuve de manière à obtenir une température minimale de 200°C au coeur du produit.

Le produit isolant final a une épaisseur nominale de 200 mm et une densité nominale de 11 kg/m³. Il présente des propriétés mécaniques en termes de résistance en traction, reprise en épaisseur et capacité d'absorption de l'eau identiques à celles d'un produit fabriqué dans les mêmes conditions avec une composition d'encollage témoin ne contenant pas d'extendeur.

### EXEMPLE 2

On prépare une résine liquide dans les conditions de l'exemple 1.

On prépare un mélange contenant 80 parts en poids sec de la résine liquide et 20 parts en poids d'urée.

On prépare une composition d'encollage en mélangeant 100 parts (en poids sec) du mélange précité de résine et d'urée, 5 parts en poids d'une dextrine issue d'amidon de maïs, 3 parts de sulfate d'ammonium, 0,75 part de silane (Silquest® A-1100 commercialisé par OSI) et 9,5 parts d'une huile minérale.

La dextrine issue d'amidon de maïs présente une masse molaire moyenne en poids égale à 3510 et un équivalent en dextrose (DE) égal à 30 (Roclys® C30725 commercialisé par Roquette Frères ; exemple 2a) ou une masse molaire moyenne en poids égale à 1850 et un équivalent en dextrose (DE) égal à 30 (Tackidex® 30L75 commercialisé par Roquette Frères ; exemple 2b).

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Cette composition d'encollage est utilisée dans les conditions de l'exemple 1 pour fabriquer un produit isolant à base de laine minérale ayant une épaisseur nominale de 80 mm et une densité nominale de 11 kg/m$^3$.

On fabrique également dans les mêmes conditions un produit d'isolation (Référence) dans lequel la composition d'encollage ne contient pas d'extendeur.

Sur les produits isolants obtenus, on mesure :

- la reprise d'épaisseur après 24 heures sous compression avec un taux de compression (défini comme étant le rapport de l'épaisseur nominale à l'épaisseur sous compression) égal à 5/1. La reprise d'épaisseur est le rapport de l'épaisseur mesurée à l'épaisseur nominale, exprimée en % ; elle permet d'évaluer la bonne tenue dimensionnelle du produit.
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme Force gF) de l'échantillon et on calcule la résistance en traction par le rapport de la force de rupture F à la masse de l'échantillon, exprimée en gF/g.

La résistance en traction est mesurée après la fabrication (RT fab.) et après un vieillissement accéléré dans un autoclave à une température de 105°C sous 100 % d'humidité relative pendant 15 minutes (RT15).

Les mesures sont les rassemblées dans le tableau 1.

### EXEMPLE 3 (hors invention)

On prépare une composition d'encollage dans les conditions de l'exemple 2 modifié en ce qu'on remplace la dextrine issue d'un amidon de maïs par un hydrolysat de protéines de soja (Soyad® 12UT commercialisé par Hercules).

La composition d'encollage est utilisée pour fabriquer un produit d'isolation à base de laine minérale dans les mêmes conditions qu'à l'exemple 2.

Les mesures de reprise d'épaisseur et de résistance en traction sont données dans le tableau 1.

Tableau 1

|  | Ex. 2a | Ex. 2b | Ex. 3 | Référence |
|---|---|---|---|---|
| Reprise d'épaisseur (%) | 151 | 151 | 150 | 149 |
| Résistance en traction (gF/g) | | | | |
| RT fab. | 337 | 327 | 360 | 297 |
| RT15 | 319 | 318 | 347 | 257 |
| Perte (%) | 5,3 | 2,7 | 3,6 | 13,4 |

La présence d'un extendeur dans les exemples 2 et 3 améliore la résistance en traction des produits et permet de conserver une reprise d'épaisseur comparable à celle du produit de référence sans extendeur.

## Revendications

1. Composition d'encollage pour fibres minérales contenant une résine phénolique liquide constituée de condensats de phénol-formaldéhyde et de phénol-formaldéhyde-monoéthanolamine, ladite résine phénolique liquide présentant un taux de formaldéhyde libre inférieur ou égal à 0,1 % en poids total de liquide, un taux de phénol libre inférieur ou égal à 0,5 % en poids total de liquide, et une diluabilité à l'eau, à 20 °C, supérieure ou égale à 1000 %, et de 0,1 à 40 parts en poids pour 100 parts en poids sec de résine liquide d'un extendeur choisi parmi les hydrates de carbone.

**2.** Composition selon la revendication 1, **caractérisée en ce qu'**elle présente un taux de phénol libre inférieur ou égal à 0,4 % en poids total de liquide.

**3.** Composition selon l'une des revendications 1 à 2, **caractérisée en ce que** la résine présente un taux de formaldéhyde libre inférieur ou égal à 0,1 %, un taux de phénol libre inférieur à 0,4 % et une diluabilité à l'eau, à 20°C, supérieure ou égale à 2000 %.

**4.** Composition selon la revendication 1, **caractérisée en ce que** l'hydrate de carbone est choisi parmi les monosaccharides, les oligosaccharides et les polysaccharides.

**5.** Composition selon la revendication 4, **caractérisée en ce que** l'hydrate de carbone est choisi parmi l'érythrose, le thréose, le ribose, l'arabinose, le xylose, le lyxose, le glucose, l'allose, l'altrose, le mannose, le gulose, l'idose, le galactose, le talose le psicose, le fructose, le sorbose et le tagatose, le lactose, le maltose, le sucrose, le cellobiose, le tréhalose, le raffinose, le gentianose, le melibiose et le stachyose, les amidons, modifiés ou non, les celluloses, la gomme de guar et le xanthane, les alginates, les pectines.

**6.** Composition selon l'une des revendications 1 à 5, **caractérisée en ce qu'**elle comprend en outre 0 à 40 parts d'urée pour 100 parts en poids sec du mélange constitué par la résine et l'urée.

**7.** Composition selon l'une des revendications 1 à 6, **caractérisée en ce que** la teneur en extendeur varie de 3 à 20 parts en poids pour 100 parts en poids sec de résine liquide.

**8.** Composition selon la revendication 7, **caractérisée en ce que** la teneur en extendeur est inférieure ou égale à 15 parts en poids pour 100 parts en poids sec de résine liquide.

**9.** Composition selon l'une des revendications 1 à 8, **caractérisée en ce qu'**elle comprend en outre les additifs suivants, pour 100 parts en poids sec de résine liquide et le cas échéant d'urée :

- 0 à 10 parts d'un catalyseur,
- 0 à 2 parts de silane,
- 0 à 20 parts d'huile,
- 0 à 20 parts d'ammoniaque (solution à 20 % en poids.

**10.** Composition selon la revendication 9, **caractérisée en ce qu'**elle comprend en outre les additifs suivants, pour 100 parts en poids sec de résine liquide et le cas échéant d'urée :

- 0 à 10 parts de sulfate d'ammonium,
- 0 à 2 parts d'un aminosilane,
- 0 à 20 parts d'huile,
- 0 à 20 parts d'ammoniaque (solution à 20 % en poids.

**11.** Composition selon l'une des revendications 9 à 10, **caractérisée en ce qu'**elle comprend en outre les additifs suivants, pour 100 parts en poids sec de résine liquide et le cas échéant d'urée :

- moins de 7 parts d'un catalyseur,
- 0 à 2 parts de silane,
- 6 à 15 parts d'huile,
- moins de 12 parts d'ammoniaque (solution à 20 % en poids).

**12.** Composition selon l'une des revendications 1 à 11, **caractérisée en ce que** les fibres minérales sont des fibres de verre ou de roche.

**13.** Utilisation d'une composition d'encollage selon l'une des revendications 1 à 11 pour la fabrication de produits isolants à base de fibres minérales.

**14.** Utilisation selon la revendication 13 **caractérisée en ce que** les fibres minérales sont des fibres de verre ou de roche.

**Patentansprüche**

1. Schlichtungszusammensetzung für Mineralfasern, enthaltend ein flüssiges Phenolharz, gebildet aus Kondensaten von Phenolformaldehyd und von Phenolformaldehyd-Monoethanolamin, wobei das flüssige Phenolharz einen Gehalt an freiem Formaldehyd von unter oder gleich 0,1 Gew.-% insgesamt an Flüssigkeit, einen Gehalt an freiem Phenol von unter oder gleich 0,5 Gew.-% insgesamt an Flüssigkeit und eine Verdünnbarkeit in Wasser bei 20 °C von über oder gleich 1000 % und 0,1 bis 40 Anteile Gewichtsanteile auf 100 Anteile Trockengewicht flüssiges Harz eines Streckmittels, ausgewählt aus den Kohlenhydraten, aufweist.

2. Zusammensetzung nach Anspruch 1, **dadurch gekennzeichnet, dass** sie einen Gehalt an freiem Phenol von unter oder gleich 0,4 Gew.-% insgesamt an Flüssigkeit aufweist.

3. Zusammensetzung nach einem der Ansprüche 1 bis 2, **dadurch gekennzeichnet, dass** das Harz einen Gehalt an freiem Formaldehyd von unter oder gleich 0,1 %, einen Gehalt an freiem Phenol von unter 0,4 % und eine Verdünnbarkeit in Wasser bei 20 °C von über oder gleich 2000 % aufweist.

4. Zusammensetzung nach Anspruch 1, **dadurch gekennzeichnet, dass** das Kohlenhydrat aus den Monosacchariden, den Oligosacchariden und den Polysacchariden ausgewählt ist.

5. Zusammensetzung nach Anspruch 4, **dadurch gekennzeichnet, dass** das Kohlenhydrat aus der Erythrose, der Threose, der Ribose, der Arabinose, der Xylose, der Lyxose, der Glucose, der Allose, der Altrose, der Mannose, der Gulose, der Idose, der Galactose, der Talose, der Psicose, der Fructose, der Sorbose und der Tagatose, der Lactose, der Maltose, der Sucrose, der Cellobiose, der Trehalose, der Raffinose, der Gentianose, der Melibiose und der Stachyose, den Stärken, modifiziert oder nicht, den Cellulosen, dem Guargummi und dem Xanthan, den Alginaten, den Pectinen ausgewählt ist.

6. Zusammensetzung nach einem der Ansprüche 1 bis 5, **dadurch gekennzeichnet, dass** sie ferner 0 bis 40 Anteile Harnstoff auf 100 Anteile Trockengewicht des Gemischs umfasst, das von dem Harz und dem Harnstoff gebildet ist.

7. Zusammensetzung nach einem der Ansprüche 1 bis 6, **dadurch gekennzeichnet, dass** der Gehalt an Streckmittel von 3 bis 20 Gewichtsanteilen auf 100 Anteile Trockengewicht flüssiges Harz schwankt.

8. Zusammensetzung nach Anspruch 7, **dadurch gekennzeichnet, dass** der Gehalt an Streckmittel unter oder gleich 15 Gewichtsanteile auf 100 Anteile Trockengewicht flüssiges Harz beträgt.

9. Zusammensetzung nach einem der Ansprüche 1 bis 8, **dadurch gekennzeichnet, dass** sie ferner auf 100 Anteile Trockengewicht flüssiges Harz und gegebenenfalls Harnstoff folgende Zusätze umfasst:

    - 0 bis 10 Anteile eines Katalysators,
    - 0 bis 2 Anteile Silan,
    - 0 bis 20 Anteile Öl,
    - 0 bis 20 Anteile Ammoniak (Lösung zu 20 Gew.-%).

10. Zusammensetzung nach Anspruch 9, **dadurch gekennzeichnet, dass** sie ferner auf 100 Anteile Trockengewicht flüssiges Harz und gegebenenfalls Harnstoff folgende Zusätze umfasst:

    - 0 bis 10 Anteile Ammoniumsulfat,
    - 0 bis 2 Anteile eines Aminosilans,
    - 0 bis 20 Anteile Öl,
    - 0 bis 20 Anteile Ammoniak (Lösung zu 20 Gew.-%).

11. Zusammensetzung nach einem der Ansprüche 9 bis 10, **dadurch gekennzeichnet, dass** sie ferner auf 100 Anteile Trockengewicht flüssiges Harz und gegebenenfalls Harnstoff folgende Zusätze umfasst:

    - weniger als 7 Anteile eines Katalysators,
    - 0 bis 2 Anteile Silan,
    - 6 bis 15 Anteile Öl,
    - weniger als 12 Anteile Ammoniak (Lösung zu 20 Gew.-%).

12. Zusammensetzung nach einem der Ansprüche 1 bis 11, **dadurch gekennzeichnet, dass** die Mineralfasern Glas- oder Steinfasern sind.

13. Verwendung einer Schlichtungszusammensetzung nach einem der Ansprüche 1 bis 11 für die Herstellung von Isolationsprodukten auf der Basis von Mineralfasern.

14. Verwendung nach Anspruch 13, **dadurch gekennzeichnet, dass** die Mineralfasern Glas- oder Steinfasern sind.

**Claims**

1. A sizing composition for mineral fibers containing a liquid phenolic resin mainly composed of phenol-formaldehyde and phenol-formaldehyde-monoethanolamine condensates, said liquid phenolic resin having a free formaldehyde content of 0.1 % or less expressed with respect to the total weight of liquid, a free phenol content of 0.5% or less expressed with respect to the total weight of liquid and a water dilutability, at 20°C, of 1000% or higher and from 0.1 to 40 parts by weight per 100 parts by dry weight of liquid resin of an extender chosen from carbohydrates.

2. The composition as claimed in claim 1, **characterized in that** it has a free phenol content of 0 0.4% or less expressed with respect to the total weight of liquid.

3. The composition as claimed in claim 1 or 2, **characterized in that** the resin has a free formaldehyde content of 0.1% or less, a free phenol content of less than 0.4% and a water dilutability, at 20°C, of 2000% or higher.

4. The composition as claimed in one 1, **characterized in that** the carbohydrate is chosen from monosaccharides, oligosaccharides and polysaccharides.

5. The composition as claimed in claim 4, **characterized in that** the carbohydrate is chosen from erythrose, threose, ribose, arabinose, xylose, lyxose, glucose, allose, altrose, mannose, gulose, idose, galactose, talose, psicose, fructose, sorbose and tagatose, lactose, maltose, sucrose, cellobiose, trehalose, raffinose, gentianose, melibiose and stachyose, modified or unmodified starches, celluloses, guar gum and xanthan gum, alginates and pectins.

6. The composition as claimed in one of claims 1 to 5, **characterized in that** it also comprises 0 to 40 parts of urea per 100 parts by dry weight of the mixture constituted by the resin and the urea.

7. The composition as claimed in one of claims 1 to 6, **characterized in that** the content of extender varies from 3 to 20 parts by weight per 100 parts by dry weight of liquid resin.

8. The composition as claimed in claim 7, **characterized in that** the content of extender is 15 parts or less by weight per 100 parts by dry weight of liquid resin.

9. The composition as claimed in one of claims 1 to 8, **characterized in that** it also comprises the following additives, per 100 parts by dry weight of liquid resin and where appropriate of urea:

   - 0 to 10 parts of a catalyst,
   - 0 to 2 parts of silane,
   - 0 to 20 parts of oil,
   - 0 to 20 parts of aqueous ammonia (20 wt% solution.

10. The composition as claimed in claim 1, **characterized in that** it also comprises the following additives, per 100 parts by dry weight of liquid resin and where appropriate of urea:

   - 0 to 10 parts of ammonium sulfate,
   - 0 to 2 parts of an aminosilane,
   - 0 to 20 parts of oil,
   - 0 to 20 parts of aqueous ammonia (20 wt% solution).

11. The composition as claimed in one of claims 9 to 10, **characterized in that** it also comprises the following additives, per 100 parts by dry weight of liquid resin and where appropriate of urea:

- less than 7 parts of a catalyst,
- 0 to 2 parts of silane,
- 6 to 15 parts of oil,
- less than 12 parts of aqueous ammonia (20 wt% solution).

12. The composition as claimed in one of claims 1 to 11, **characterized in that** the mineral fibers are glass fibers or rock fibers.

13. The use of a sizing composition as claimed in one of claims 1 to 11 for the fabrication of insulating products based on mineral fibers.

14. The use according to claim 13 **characterized in that** the fibers are glass fibers or rock fibers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0148050 A1
- EP 0480778 A1
- WO 2007060237 A
- WO 2006132785 A